# EUROPEAN PATENT APPLICATION

(11) **EP 4 687 053 A1**
(43) Date of publication of application: **04.02.2026**
(21) Application number: 25192385.0
(22) Date of filing: 29.07.2025
(51) Int. Cl.: G06F 18/214, G06F 21/62, G06N 3/044, G06N 3/045, G06N 3/0455, G06N 3/0464, G06N 3/047, G06N 3/0475, G06N 3/08, G06N 3/082, G06N 3/084, G06N 3/09, G06N 20/00

(54) **PRIVACY ERASE MODEL TRAINING METHOD AND APPARATUS AND PRIVACY ERASE METHOD AND APPARATUS**

(30) Priority: 29.07.2024 CN 202411025575
(71) Applicant: Ant Group Co., Ltd., Hangzhou City, Zhejiang Province (CN)
(72) Inventor: LIU, Yan, Hangzhou (CN); WENG, Haiqin, Hangzhou (CN)
(74) Representative: Goddar, Heinz J.

(57) **Abstract**

Implementations of the present specification disclose a privacy erase model training method. In the training method, a large language model is separately trained based on original training data and anonymized data of the original training data by using completely same training methods, and weights of the same large language model on the original training data and the anonymized data are recorded, to form a new erase data training set. A privacy erase model can be trained by using the erase data training set, to erase weight data related to privacy data from the large language model. In the method, the privacy erase model is trained to directly modify a parameter of the large language model, so that the privacy data in memory of the large language model is fundamentally deleted, thereby achieving extremely high security. In the method, the large language model does not need to be retrained, so that optimization costs of the large language model are greatly reduced. A privacy erase model training apparatus and a privacy erase method and apparatus in the implementations of the present specification also have the above effects.

## Description

### TECHNICAL FIELD

The present invention relates to the field of artificial intelligence technologies, and in particular, to a privacy erase model training method and apparatus and a privacy erase method and apparatus.

### BACKGROUND

In a training process of a large language model (LLM), training data may include a large amount of privacy data. An attacker can initiate a question to the large language model and extract privacy data from a response content, resulting in privacy disclosure. For the privacy disclosure problem, there are two main existing solutions. One solution is anonymizing or directly deleting the privacy data of the training data, and then retraining the large language model. In this method, the large language model needs to be retrained, and consequently costs are extremely high. Another solution is filtering contents in request and response phases of the large language model, to block or anonymize a malicious question or a response content that includes privacy information. However, this method is very easy to be bypassed by an attacker.

### SUMMARY

One or more implementations of the present specification provide a privacy erase model training method and apparatus and a privacy erase method and apparatus, so that a privacy disclosure problem of a large language model can be resolved at extremely low costs.

According to a first aspect, a privacy erase model training method is provided. The method includes: obtaining at least one large language model to be trained; obtaining a first training sample set that includes privacy data; performing anonymization processing on the privacy data in the first training sample set to obtain an anonymized second training sample set; for each large language model of the at least one large language model, training the large language model by using the first training sample set, and obtaining first weight data of the large language model after the large language model is trained by using the first training sample set; training the large language model by using the second training sample set and by using a training process completely consistent with that of the training the large language model by using the first training sample set, and obtaining second weight data of the large language model after the large language model is trained by using the second training sample set; and training a privacy erase model by using a model structure description text of the large language model and the first weight data of the large language model as training samples, and using the second weight data of the large language model as labels.

As an optional implementation of the method according to the first aspect, the training the privacy erase model includes: inputting the model structure description text of the large language model and the first weight data of the large language model to the privacy erase model; constructing a loss function based on model weight data predicted by the privacy erase model and the second weight data of the large language model; and updating a parameter of the privacy erase model based on the loss function.

Specifically, the loss function is constructed based on a cross entropy between the predicted model weight data and the second weight data of the large language model.

According to a second aspect, a privacy erase method is provided. The method includes: obtaining weight data of a target large language model after the target large language model is trained based on a training task; inputting a model structure description text of the target large language model and the weight data to a privacy erase model, to obtain privacy-erased weight data, where the privacy erase model is obtained through pre-training according to the above privacy erase model training method; and reconstructing the target large language model based on the model structure description text and the privacy-erased weight data.

As an optional implementation of the method according to the second aspect, the obtaining the weight data after the target large language model is trained based on the training task includes: obtaining a third training sample set based on the training task of the target large language model; training the target large language model by using the third training sample set; and obtaining the weight data of the trained target large language model.

According to a third aspect, a privacy erase model training apparatus is provided. The apparatus includes: a first data acquisition module, configured to obtain at least one large language model to be trained; a second data acquisition module, configured to obtain a first training sample set that includes privacy data; an anonymization module, configured to perform anonymization processing on the privacy data in the first training sample set to obtain an anonymized second training sample set; a first training module, configured to: for each large language model of the at least one large language model, train the large language model by using the first training sample set, and obtain first weight data of the large language model after the large language model is trained by using the first training sample set; and train the large language model by using the second training sample set and by using a training process completely consistent with that of the training the large language model by using the first training sample set, and obtain second weight data of the large language model after the large language model is trained by using the second training sample set; and a second training module, configured to train a privacy erase model by using a model structure description text of the large language model and the first weight data of the large language model as training samples, and using the second weight data of the large language model as labels.

As an optional implementation of the apparatus according to the third aspect, the second training module is specifically configured to input the model structure description text of the large language model and the first weight data of the large language model to the privacy erase model; construct a loss function based on model weight data predicted by the privacy erase model and the second weight data of the large language model; and update a parameter of the privacy erase model based on the loss function.

Specifically, the second training module is specifically configured to construct the loss function based on a cross entropy between the predicted model weight data and the second weight data of the large language model.

According to a fourth aspect, a privacy erase apparatus is provided. The apparatus includes: a third data acquisition module, configured to obtain weight data of a target large language model after the target large language model is trained based on a training task; and a privacy erase module, configured to input a model structure description text of the target large language model and the weight data to a privacy erase model, to obtain privacy-erased weight data; and reconstruct the target large language model based on the privacy-erased weight data, where the privacy erase model is obtained through pre-training according to the above privacy erase model training method.

As an optional implementation of the apparatus according to the fourth aspect, the third data acquisition module is specifically configured to obtain a third training sample set based on the training task of the target large language model; train the target large language model by using the third training sample set; and obtain the weight data of the trained target large language model.

According to a fifth aspect, a computer readable storage medium is provided. The computer readable storage medium stores a computer program, and when the computer program runs on an electronic device, the electronic device is enabled to perform the above privacy erase model training method, or perform the above privacy erase method.

According to a fifth aspect, an electronic device is provided, including: at least one memory, configured to store a program; and at least one processor, configured to execute the program stored in the memory, where when the program stored in the memory is executed, the processor is configured to perform the above privacy erase model training method, or perform the above privacy erase method.

Beneficial effects of the privacy erase model training method in the implementations of the present specification are as follows: In the method, the privacy erase model is trained to directly modify a parameter of the large language model, so that the privacy data in memory of the large language model is fundamentally deleted, thereby achieving extremely high security. In the method, the large language model does not need to be retrained, so that optimization costs of the large language model are greatly reduced. The privacy erase model training apparatus and the privacy erase method and apparatus in the implementations of the present specification also have the above beneficial effects.

### BRIEF DESCRIPTION OF DRAWINGS

To describe the technical solutions in the implementations of the present specification or in the existing technologies more clearly, the following is a brief introduction of the accompanying drawings for illustrating such technical solutions. Clearly, the accompanying drawings described below are some implementations of the present specification, and a person of ordinary skill in the art can derive other drawings from such accompanying drawings without making innovative efforts.
FIG. 1 is a schematic flowchart illustrating an example of a privacy erase model training method according to an implementation of the present specification;
FIG. 2 illustrates an example of a privacy erase model training framework according to an implementation of the present specification;
FIG. 3 is a schematic diagram illustrating an example of a structure of a privacy erase model training apparatus according to an implementation of the present specification;
FIG. 4 is a schematic flowchart illustrating an example of a privacy erase method according to an implementation of the present specification;
FIG. 5 is a schematic diagram illustrating an example of a structure of a privacy erase apparatus according to an implementation of the present specification; and
FIG. 6 is a schematic diagram illustrating an example of a structure of an electronic device according to an implementation of the present specification.

### DESCRIPTION OF IMPLEMENTATIONS

First, it should be noted that the terms used in the implementations of the present invention are merely for the purpose of describing specific implementations, and are not intended to limit the present invention. The terms "a", "the", and "this" of singular forms used in the implementations of the present specification and the appended claims are also intended to include plural forms, unless otherwise specified in the context clearly.

To make a person skilled in the art better understand the technical solutions in the present specification, the following clearly and comprehensively describes the technical solutions in implementations of the present specification with reference to the accompanying drawings in implementations of the present specification. Clearly, the described implementations are merely some rather than all of implementations of the present specification. Therefore, a person of ordinary skill in the art should be aware that various changes and modifications can be made to the implementations described herein without departing from the scope and concept of the present invention. Similarly, for clarity and simplicity, descriptions of well-known functions and structures are omitted in the following descriptions.

It should be noted that, in other implementations, the steps of the corresponding method are not necessarily performed in the sequence shown and described in the present specification. In some other implementations, the method can include more or fewer steps than those described in the present specification. In addition, a single step described in the present specification may be broken down into multiple steps in other implementations for description, and multiple steps described in the present specification may be combined into a single step in other implementations for description.

A large language model (LLM) is a deep learning model trained based on massive text data. The model can generate a natural language text or understand the meaning of a language text. Such a model can perform multiple natural language processing tasks, including but not limited to text classification, question and answer, and conversations. As a scale of the model increases, the LLM can generate more accurate and coherent output while processing a more complex and longer input sequence. In addition, a larger model can cover a wider range of knowledge and language contexts to provide more comprehensive and targeted answers and solutions.

Training of the large language model requires a large amount of training data, and the training data includes a large amount of privacy data, especially personal privacy data. In the personal privacy data, personal identification information (PII) is most common, and is specifically information that can identify a personal identity when being used separately or used with other related data, such as a mobile number, an identity card number, a driving license, or a communication address.

In an application process of the large language model, an attacker can initiate a question to the large language model and then extract personal privacy data from a response content, resulting in personal privacy disclosure. To avoid this problem, two solutions are commonly used in the industry at present:

One solution is anonymizing or directly deleting the personal privacy data of the training data, and then retraining the large language model. However, in this method, the large language model needs to be retrained, and consequently costs are extremely high.

Another solution is filtering contents in request and response phases of the large language model, to block or anonymize a malicious question or a response content that includes privacy information. However, this method is very easy to be bypassed by an attacker by modifying an attack manner.

As such, in the existing technologies, a safe, effective, and low-costs privacy disclosure solution for the large language model is urgently needed.

In view of this, one or more implementations of the present specification provide a privacy erase model training method and apparatus and a privacy erase method and apparatus, so that a privacy disclosure problem of a large language model can be resolved at extremely low costs.

The following further describes in detail the privacy erase model training method and apparatus and the privacy erase method and apparatus in the one or more implementations of the present specification with reference to the accompanying drawings of the present specification and specific implementations. However, the detailed descriptions do not constitute a limitation on the implementations of the present specification.

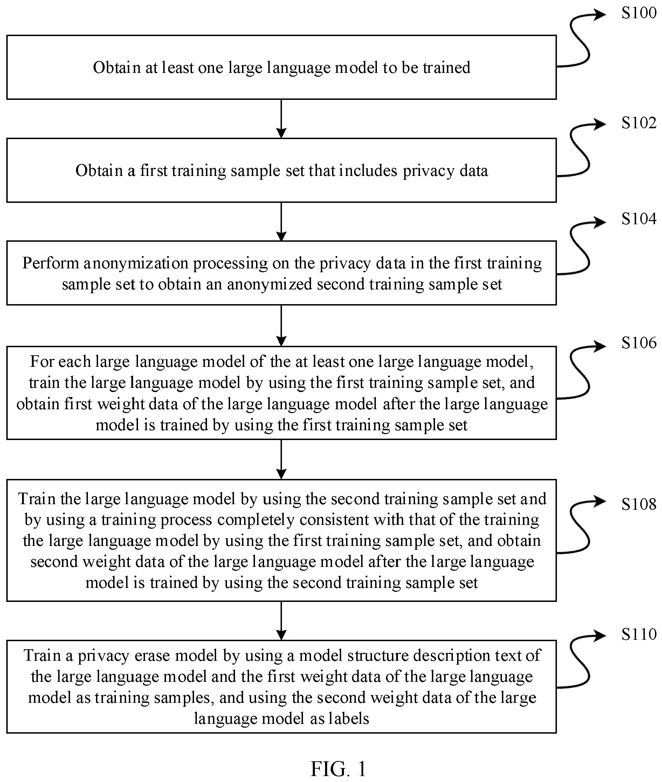

Referring to FIG. 1, FIG. 1 is a flowchart illustrating a privacy erase model training method according to one or more implementations of the present specification. The training method shown in FIG. 1 can be performed by a privacy erase model training apparatus. The training apparatus can be deployed on a device terminal, or can be disposed on a server end. The device terminal can be an intelligent device such as a mobile phone, a tablet computer, a desktop computer, or a portable notebook. The server end can be an independent server, or can be a server cluster including multiple servers.

As shown in FIG. 1, in some implementations, the privacy erase model training method can include step S100 to step S110:
S100: Obtain at least one large language model to be trained.
S102: Obtain a first training sample set that includes privacy data.
S104: Perform anonymization processing on the privacy data in the first training sample set to obtain an anonymized second training sample set.
S106: For each large language model of the at least one large language model, train the large language model by using the first training sample set, and obtain first weight data of the large language model after the large language model is trained by using the first training sample set.
S108: Train the large language model by using the second training sample set and by using a training process completely consistent with that of the training the large language model by using the first training sample set, and obtain second weight data of the large language model after the large language model is trained by using the second training sample set.
S110: Train a privacy erase model by using a model structure description text of the large language model and the first weight data of the large language model as training samples, and using the second weight data of the large language model as labels.

It can be learned that in the privacy erase model training method shown in FIG. 1, the large language model is separately trained based on original training data and anonymized data of the original training data. Training algorithms, the numbers of rounds, and other parameters of the two separate training processes are completely consistent between the two separate training processes. Weights of the same large language model on the original training data and the anonymized data are recorded, to form a new erase data training set. A privacy erase model can be trained by using the erase data training set, to erase weight data related to privacy data from the large language model.

The following describes the method shown in FIG. 1 with reference to the accompanying drawings and specific implementations.

First, in step S100, the at least one large language model to be trained is obtained.

The above large language model can be any, e.g., open-source, large language model. Types and the number of open-source large language models can be adaptively selected based on a requirement. This is not limited in this specification.

Next, in step S102, the first training sample set that includes the privacy data is obtained.

Corresponding to the above open-source large language model, the first training sample set herein can be original training data that includes a common open-source data set, and can include common types of personal privacy data, such as a mobile number, an identity card number, a driving license, or a communication address.

Next, in step S104, anonymization processing is performed on the privacy data in the first training sample set to obtain the anonymized second training sample set.

In some implementations, firstly, a type of the privacy data that needs to be anonymized can be determined; then, a regular matching rule can be constructed based on the determined type of the privacy data; and finally, the privacy data in the first training sample set can be determined in a regular matching manner. After the privacy data in the first training sample set is identified, anonymization processing can be performed on the privacy data in a data rewriting or a data removal manner, to obtain the second training sample set.

Next, in step S106, for each large language model, the large language model is trained by using the first training sample set, and the first weight data is obtained after the large language model is trained by using the first training sample set.

A training task and a task loss function of the above large language model can be set based on a requirement. For example, the training task can be an identity identification task or a consistency comparison task. Correspondingly, the above first training sample set should also be a training sample set for the training task. When the above large language model is trained, a parameter of the above large language model is updated based on the set task loss function, until the training ends. In this case, weight coefficients of the large language model can be used as the first weight data.

Next, in step S108, the large language model is trained by using the second training sample set by using the completely consistent training process, and the second weight data is obtained after the large language model is trained by using the second training sample set.

In this step, for training of the large language model, a task loss function, a training method, and the number of training rounds in the training process are the same as those in the training process described in step S106, except that different training data sets are used. After the large language model is trained based on the second training sample set, weight coefficients of the large language model can be used as the second weight data.

Next, in step S110, the privacy erase model is trained by using the model structure description text of the large language model and the first weight data of the large language model as the training samples, and using the second weight data of the large language model as the labels.

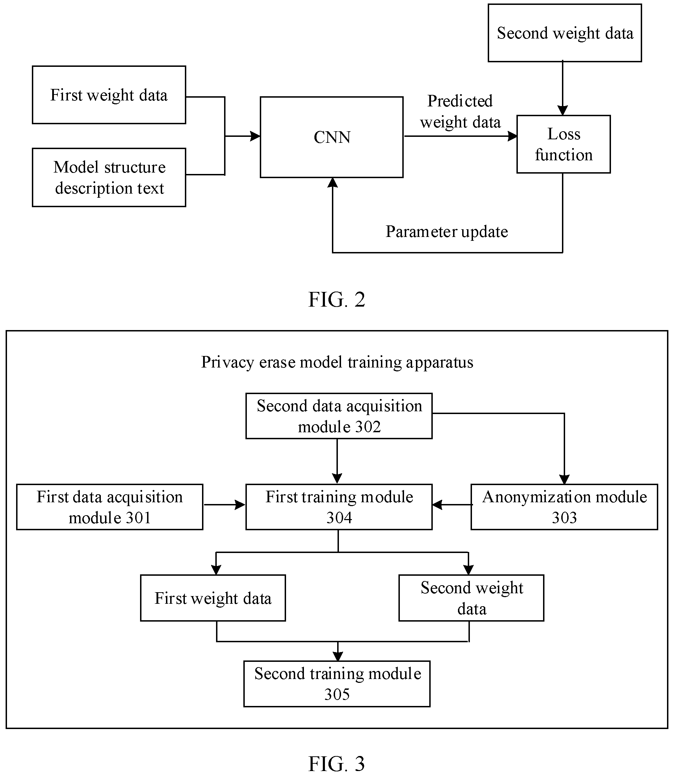

Referring to FIG. 2, FIG. 2 illustrates a privacy erase model training framework. A network structure of the privacy erase model can be selected based on a requirement. This is not limited in this specification. For example, a convolutional neural network (CNN) can be used as the privacy erase model. The following description uses the CNN as an example to describe a privacy erase model training process with reference to FIG. 2.

As shown in FIG. 2, inputs of the privacy erase model, e.g., the CNN, include the model structure description text of the large language model and the first weight data, and outputs of the privacy erase model include predicted weight coefficients of the large language model. A loss function is constructed based on a difference between predicted weight efficiency, e.g., predicted weight data, and second weight efficiency, e.g., the second weight data, of the large language model, and a network parameter of the CNN is updated by using the loss function, until the training ends. In this case, a trained privacy erase model is obtained.

In some implementations, a cross entropy can be used to represent the difference between the predicted weight efficiency and the second weight efficiency of the large language model, that is, the loss function can be a cross entropy between predicted model weight data and the second weight data of the large language model.

In some implementations, the above model structure description text can be manually constructed.

Corresponding to the above privacy erase model training method, this specification further provides a privacy erase model training apparatus. Referring to FIG. 3, FIG. 3 illustrates an example of a privacy erase model training apparatus. The privacy erase model training apparatus can be configured to implement the above privacy erase model training method. It should be noted that the privacy erase model training method in one or more implementations of the present application can be implemented by relying on the privacy erase model training apparatus shown in FIG. 3, but is not limited to being implemented by the training apparatus.

As shown in FIG. 3, the privacy erase model training apparatus includes: first data acquisition module 301, configured to obtain at least one large language model to be trained; second data acquisition module 302, configured to obtain a first training sample set that includes privacy data; anonymization module 303, configured to perform anonymization processing on the privacy data in the first training sample set to obtain an anonymized second training sample set; first training module 304, configured to: for each large language model of the at least one large language model, train the large language model by using the first training sample set, and obtain first weight data of the large language model after the large language model is trained by using the first training sample set; and train the large language model by using the second training sample set and by using a training process completely consistent with that of the training the large language model by using the first training sample set, and obtain second weight data of the large language model after the large language model is trained by using the second training sample set; and second training module 305, configured to train a privacy erase model by using a model structure description text of the large language model and the first weight data of the large language model as training samples, and using the second weight data of the large language model as labels.

For first data acquisition module 301, the large language model obtained by first data acquisition module 301 can be any, e.g., open-source, large language model. Types and the number of open-source large language models can be adaptively selected based on a requirement. This is not limited in this specification.

For second data acquisition module 302, the first training sample set obtained by second data acquisition module 302 can be original training data that includes a common open-source data set, and can include a common personal privacy data type, such as a mobile number, an identity card number, a driver license, or a communication address.

For anonymization module 303, anonymization module 303 can determine the privacy data in the first training sample set in a regular matching manner according to a pre-constructed regular matching rule, and then perform anonymization processing on the privacy data in a data rewriting or a data removal manner, to obtain the above second training sample set. The above regular matching rule can be constructed based on a type of the privacy data that needs to be anonymized.

For first training module 304, the module is mainly configured to separately train the above large language model by using the first training sample set that includes the privacy data and the second training sample set that does not include the privacy data. Specifically, when training the above large language model by using the first training sample set, first training module 304 can update a parameter of the above large language model based on a preset task loss function, until the training ends. In this case, weight coefficients of the large language model can be used as the first weight data. Correspondingly, when first training module 304 trains the above large language model by using the second training sample set, a task loss function, a training method, and the number of training rounds in the training process are the same as those in the training process in which training is performed based on the first training sample set, except that different training data sets are used. After the large language model is trained based on the second training sample set, weight coefficients of the large language model are the above second weight data.

It should be noted that when training the same large language model by using the above two different training sample sets, first training module 304 can perform sequential training, or can perform synchronous training. This is not limited in this specification.

For second training module 305, second training module 305 can input the model structure description text of the large language model and the first weight data to the privacy erase model, then construct a loss function based on a difference between weight efficiency that is of the large language model and that is predicted by the privacy erase model and a second weight coefficient of the large language model, and update a network parameter of the privacy erase model by using the loss function, until the training ends.

A structure of the above privacy erase model can be adaptively selected based on a requirement. For example, in some implementations, a convolutional neural network (CNN) can be used as the privacy erase model.

In some implementations, a cross entropy can be used to represent the difference between the predicted weight efficiency and the second weight efficiency of the large language model, that is, the loss function can be a cross entropy between predicted model weight data and the second weight data of the large language model.

In some implementations, the above model structure description text can be manually pre-constructed.

For the above privacy erase model training apparatus, a module is used as an example of a software functional unit, and first data acquisition module 301 can include code that runs on a computing instance. The computing instance can include at least one of a physical host (a computing device), a virtual machine, and a container. Further, there can be one or more computing instances. For example, first data acquisition module 301 can include code that runs on multiple hosts/virtual machines/containers. The multiple hosts/virtual machines/containers used to run the code can be distributed in a same region (region), or can be distributed in different regions. Further, the multiple hosts/virtual machines/containers used to run the code can be distributed in a same availability zone (AZ), or can be distributed in different AZs. Each AZ includes one data center or multiple data centers with similar geographical locations. Generally, one region can include multiple AZs.

Similarly, the multiple hosts/virtual machines/containers used to run the code can be distributed in a same virtual private cloud (VPC), or can be distributed in multiple VPCs. Generally, one VPC is disposed in one region, and a communication gateway needs to be disposed in each VPC for communication between two VPCs in a same region and cross-region communication between VPCs in different regions. Interconnection between the VPCs is implemented by using the communication gateway.

A module is used as an example of a hardware functional unit, and first data acquisition module 301 can include at least one computing device, such as a server. Alternatively, first data acquisition module 301 can be a device implemented by using an application-specific integrated circuit (ASIC), a programmable logic device (PLD), or the like. The PLD can be implemented by using a complex programmable logical device (CPLD), a field-programmable gate array (FPGA), generic array logic (GAL), or any combination thereof.

Multiple computing devices included in first data acquisition module 301 can be distributed in a same region, or can be distributed in different regions. Multiple computing devices included in first data acquisition module 301 can be distributed in a same AZ, or can be distributed in different AZs. Similarly, multiple computing devices included in first data acquisition module 301 can be distributed in a same VPC, or can be distributed in multiple VPCs. The multiple computing devices can be any combination of computing devices such as a server, an ASIC, a PLD, a CPLD, an FPGA, and GAL.

In other implementations, first data acquisition module 301 can be configured to perform any step of the above privacy erase model training method, second data acquisition module 302 can be configured to perform any step of the above privacy erase model training method, anonymization module 303 can be configured to perform any step of the above privacy erase model training method, first training module 304 can be configured to perform any step of the above privacy erase model training method, and second training module 305 can be configured to perform any step of the above privacy erase model training method. Steps that first data acquisition module 301, second data acquisition module 302, anonymization module 303, first training module 304, and second training module 305 are responsible for implementing can be specified based on a requirement, and different steps of the above privacy erase model training method are separately implemented by using first data acquisition module 301, second data acquisition module 302, anonymization module 303, first training module 304, and second training module 305, to implement all functions of the above privacy erase model training apparatus.

In this implementation, the privacy erase training apparatus can be applied to a computing device such as a computer or a server, or be applied to a computing device cluster including at least one computing device, to implement a privacy erase model training function.

Based on the privacy erase model trained in the above privacy erase model training method, this specification further provides a privacy erase method. The method can be performed by a privacy erase apparatus. The apparatus can be deployed on a device terminal, or can be disposed on a server end. The device terminal can be an intelligent device such as a mobile phone, a tablet computer, a desktop computer, or a portable notebook. The server end can be an independent server, or can be a server cluster including multiple servers.

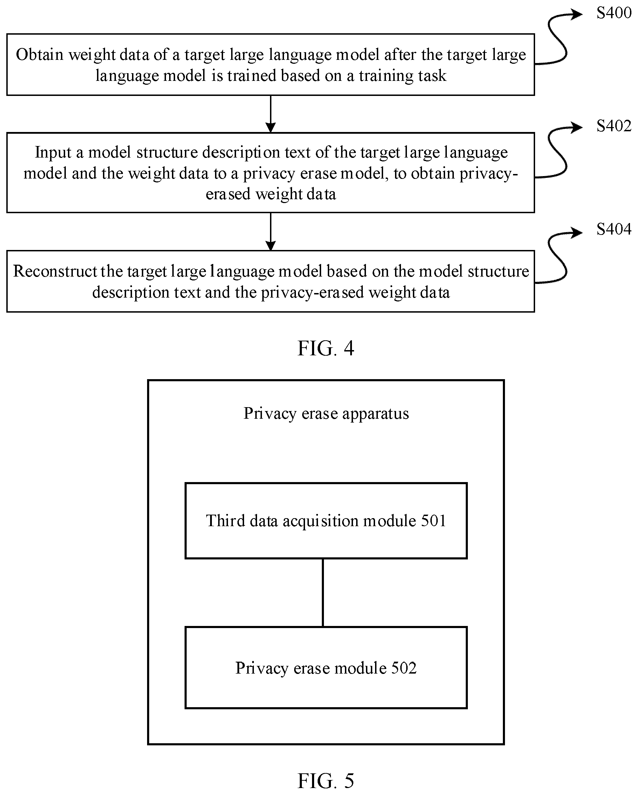

As shown in FIG. 4, in some implementations, the privacy erase method can include steps S400 to S404:
S400: Obtain weight data of a target large language model after the target large language model is trained based on a training task.

In step S400, the target large language model is a model that has been trained for a training task of the model. The above target large language model can be trained in the following manner: obtaining a third training sample set based on the training task of the target large language model; training the target large language model by using the third training sample set, until a target large language model that satisfies a preset condition is obtained; and obtaining weight data of the target large language model after the target large language model is trained.

S402: Input a model structure description text of the target large language model and the weight data to a privacy erase model, to obtain privacy-erased weight data.

The privacy erase model used in step S402 is obtained through pre-training based on the above privacy erase model method. A specific training process is omitted herein for simplicity.

The model structure description text of the target large language model can be manually constructed and input.

S404: Reconstruct the target large language model based on the model structure description text and the privacy-erased weight data.

After the privacy-erased weight data is obtained, the original weight data of the target large language model can be replaced with the privacy-erased weight data, to obtain a privacy-erased target large language model.

Corresponding to the above privacy erase method, this specification further provides a privacy erase apparatus. Referring to FIG. 5, FIG. 5 illustrates an example of a privacy erase apparatus. The privacy erase apparatus can be configured to implement the above privacy erase method. It should be noted that the privacy erase method in one or more implementations of the present application can be implemented by relying on the privacy erase apparatus shown in FIG. 5, but is not limited to being implemented by the apparatus.

As shown in FIG. 5, the privacy erase apparatus includes: third data acquisition module 501, configured to obtain weight data of a target large language model after the target large language model is trained based on a training task; and privacy erase module 502, configured to input a model structure description text of the target large language model and the weight data to a privacy erase model, to obtain privacy-erased weight data; and reconstruct the target large language model based on the privacy-erased weight data.

For third data acquisition module 501, third data acquisition module 501 can be specifically configured to obtain a third training sample set based on the training task of the target large language model; train the target large language model by using the third training sample set; and obtain the weight data of the trained target large language model.

For privacy erase module 502, the privacy erase model used by privacy erase module 502 is obtained through pre-training based on the above privacy erase model method. A specific training process is omitted herein for simplicity.

The model structure description text of the target large language model can be manually constructed and input to privacy erase module 502.

After obtaining the privacy-erased weight data, privacy erase module 502 can replace the original weight data of the target large language model with the privacy-erased weight data, to obtain a privacy-erased target large language model.

For the above privacy erase apparatus, a module is used as an example of a software functional unit, and third data acquisition module 501 can include code that runs on a computing instance. The computing instance can include at least one of a physical host (a computing device), a virtual machine, and a container. Further, there can be one or more computing instances. For example, third data acquisition module 501 can include code that runs on multiple hosts/virtual machines/containers. The multiple hosts/virtual machines/containers used to run the code can be distributed in a same region (region), or can be distributed in different regions. Further, the multiple hosts/virtual machines/containers used to run the code can be distributed in a same availability zone (AZ), or can be distributed in different AZs. Each AZ includes one data center or multiple data centers with similar geographical locations. Generally, one region can include multiple AZs.

Similarly, the multiple hosts/virtual machines/containers used to run the code can be distributed in a same virtual private cloud (VPC), or can be distributed in multiple VPCs. Generally, one VPC is disposed in one region, and a communication gateway needs to be disposed in each VPC for communication between two VPCs in a same region and cross-region communication between VPCs in different regions. Interconnection between the VPCs is implemented by using the communication gateway.

A module is an example of a hardware functional unit, and third data acquisition module 501 can include at least one computing device, such as a server. Alternatively, third data acquiring module 501 may be a device implemented by using an application-specific integrated circuit (ASIC), a programmable logic device (PLD), or the like. The PLD can be implemented by using a complex programmable logical device (CPLD), a field-programmable gate array (FPGA), generic array logic (GAL), or any combination thereof.

Multiple computing devices included in third data acquisition module 501 can be distributed in a same region, or can be distributed in different regions. Multiple computing devices included in third data acquisition module 501 can be distributed in a same AZ, or can be distributed in different AZs. Similarly, multiple computing devices included in third data acquisition module 501 can be distributed in a same VPC, or can be distributed in multiple VPCs. The multiple computing devices can be any combination of computing devices such as a server, an ASIC, a PLD, a CPLD, an FPGA, and GAL.

In other implementations, third data acquisition module 501 can be configured to perform any step of the above privacy erase method, and privacy erase module 502 can be configured to perform any step of the above privacy erase method. Steps that third data acquisition module 501 and privacy erase module 502 are responsible for implementing can be specified based on a requirement, and different steps of the above privacy erase method are separately implemented by using third data acquisition module 501 and privacy erase module 502, to implement all functions of the above privacy erase apparatus.

In this implementation, the privacy erase apparatus can alternatively be applied to a computing device such as a computer or a server, or be applied to a computing device cluster including at least one computing device, to implement a privacy erase function.

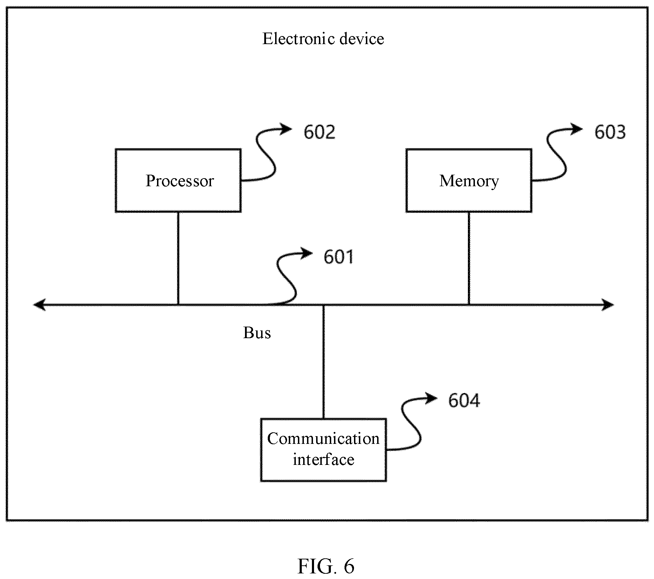

In some implementations, an electronic device is further provided. Referring to FIG. 6, the electronic device includes a bus 601, a processor 602, a memory 603, and a communication interface 604. The processor 602, the memory 603, and the communication interface 604 communicate with each other through the bus 601. The electronic device can be a server or a terminal device. It should be understood that the numbers of processors and memories in the electronic device are not limited in the present application.

The bus 601 can be a peripheral component interconnect (PCI) bus, an extended industry standard architecture (EISA) bus, or the like. The bus can be classified as an address bus, a data bus, a control bus, and the like. For ease of representation, the bus is represented by using only one line in FIG. 6, but it does not indicate that there is only one bus or only one type of bus. The bus 601 can include a path for transmitting information between components (for example, the processor 602, the memory 603, and the communication interface 604) of the electronic device.

The processor 602 can include any one or more of a processor CPU, a graphics processing unit (GPU), a micro processor (MP), a digital signal processor (DSP), or the like.

The memory 603 can include a volatile memory (volatile memory), such as a random access memory (RAM). The memory 603 can alternatively include a non-volatile memory (non-volatile memory), such as a read-only memory (ROM), a flash memory, a hard disk drive (HDD), or a solid state drive (SSD).

The memory 603 stores executable program code. The processor 602 executes the executable program code to separately implement the functions of the above first data acquisition module 301, second data acquisition module 302, anonymization module 303, first training module 304, and second training module 305, that is, implement the functions of the above privacy erase model training apparatus, to implement the above privacy erase model training method. Alternatively, the processor 602 executes the executable program code to separately implement the functions of the above third data acquisition module 501 and privacy erase module 502, that is, implement the functions of the privacy erase apparatus, to implement the above privacy erase method.

The communication interface 604 uses a transceiver module, for example, but not limited to, a network interface card or a transceiver, to implement communication between the electronic device and another device or a communication network.

In some implementations, a computer readable storage medium is further provided. The computer readable storage medium stores a computer program, and when the computer program is executed by a processor, the above privacy erase model training method is implemented, or the above privacy erase method is implemented.

The computer readable storage medium can be any available medium accessible by an electronic device, or a data storage device such as a data center that includes one or more available media. The available medium can be a magnetic medium (for example, a floppy disk, a hard disk, or a magnetic tape), an optical medium (for example, a DVD), a semiconductor medium (for example, a solid state drive), or the like. The computer readable storage medium includes instructions, and the instructions instruct an electronic device to perform the above privacy erase model training method, or perform the above privacy erase method.

It can be understood that the structure illustrated in implementations of the present specification does not constitute a specific limitation on the system in implementations of the present specification. In some other implementations of the present specification, the above system can include more or fewer components than those shown in the figure, combine some components, split some components, or have different component arrangements. The components shown in the figure can be implemented by hardware, software, or a combination of software and hardware.

The implementations of the present specification are described in a progressive way. For same or similar parts of the implementations, mutual references can be made to the implementations. Each implementation focuses on a difference from the other implementations. Particularly, an apparatus implementation is basically similar to a method implementation, and therefore is described relatively briefly. For a related part, references can be made to parts of the method implementation descriptions.

Particular implementations of the present specification are described above. Other implementations fall within the scope of the appended claims. In some cases, the actions or steps recorded in the claims can be performed in an order different from that in the implementations and the desired results can still be achieved. In addition, the process depicted in the accompanying drawings does not necessarily require the shown particular order or sequence to achieve the desired results. In some implementations, multi-tasking and parallel processing are feasible or may be advantageous.

It should be noted that the above examples are merely specific implementations of the present invention. Clearly, the present invention is not limited to the above implementations, and many similar changes subsequently occur. All variations directly derived or associated by a person skilled in the art from the content disclosed in the present invention shall fall within the protection scope of the present invention.

## Claims

1. A privacy erase model training method, comprising:
obtaining at least one large language model to be trained;
obtaining a first training sample set that includes privacy data;
performing anonymization processing on the privacy data in the first training sample set to obtain an anonymized second training sample set;
for each large language model of the at least one large language model, training the large language model by using the first training sample set, and obtaining first weight data of the large language model after the large language model is trained by using the first training sample set;
training the large language model by using the second training sample set and by using a training process completely consistent with that of the training the large language model by using the first training sample set, and obtaining second weight data of the large language model after the large language model is trained by using the second training sample set; and
training a privacy erase model by using a model structure description text of the large language model and the first weight data of the large language model as training samples, and using the second weight data of the large language model as labels.

2. The method according to claim 1, wherein the training the privacy erase model includes:
inputting the model structure description text of the large language model and the first weight data of the large language model to the privacy erase model;
constructing a loss function based on model weight data predicted by the privacy erase model and the second weight data of the large language model; and
updating a parameter of the privacy erase model based on the loss function.

3. The method according to claim 2, wherein the loss function is constructed based on a cross entropy between the predicted model weight data and the second weight data of the large language model.

4. A privacy erase method, comprising:
obtaining weight data of a target large language model after the target large language model is trained based on a training task;
inputting a model structure description text of the target large language model and the weight data to a privacy erase model, to obtain privacy-erased weight data, wherein the privacy erase model is obtained through pre-training according to any one of claims 1 to 3; and
reconstructing the target large language model based on the model structure description text and the privacy-erased weight data.

5. The method according to claim 4, wherein the obtaining the weight data after the target large language model is trained based on the training task includes:
obtaining a third training sample set based on the training task of the target large language model;
training the target large language model by using the third training sample set; and
obtaining the weight data of the trained target large language model.

6. A privacy erase model training apparatus, comprising:
a first data acquisition module, configured to obtain at least one large language model to be trained;
a second data acquisition module, configured to obtain a first training sample set that includes privacy data;
an anonymization module, configured to perform anonymization processing on the privacy data in the first training sample set to obtain an anonymized second training sample set;
a first training module, configured to: for each large language model of the at least one large language model, train the large language model by using the first training sample set, and obtain first weight data of the large language model after the large language model is trained by using the first training sample set; and train the large language model by using the second training sample set and by using a training process completely consistent with that of the training the large language model by using the first training sample set, and obtain second weight data of the large language model after the large language model is trained by using the second training sample set; and
a second training module, configured to train a privacy erase model by using a model structure description text of the large language model and the first weight data of the large language model as training samples, and using the second weight data of the large language model as labels.

7. The apparatus according to claim 6, wherein the second training module is specifically configured to input the model structure description text of the large language model and the first weight data of the large language model to the privacy erase model; construct a loss function based on model weight data predicted by the privacy erase model and the second weight data of the large language model; and update a parameter of the privacy erase model based on the loss function..

8. The apparatus according to claim 7, wherein the second training module is specifically configured to construct the loss function based on a cross entropy between the predicted model weight data and the second weight data of the large language model.

9. A privacy erase apparatus, comprising:
a third data acquisition module, configured to obtain weight data of a target large language model after the target large language model is trained based on a training task; and
a privacy erase module, configured to input a model structure description text of the target large language model and the weight data to a privacy erase model, to obtain privacy-erased weight data; and reconstruct the target large language model based on the privacy-erased weight data, wherein the privacy erase model is obtained through pre-training according to any one of claims 1 to 3.

10. The apparatus according to claim 9, wherein the third data acquisition module is specifically configured to obtain a third training sample set based on the training task of the target large language model; train the target large language model by using the third training sample set; and obtain the weight data of the trained target large language model.

11. A computer readable storage medium, wherein the computer readable storage medium stores a computer program, and when the computer program runs on an electronic device, the electronic device is enabled to perform the method according to any one of claims 1 to 3, or perform the method according to any one of claims 4 and 5.

12. An electronic device, comprising:
at least one memory, configured to store a program; and
at least one processor, configured to execute the program stored in the memory, wherein when the program stored in the memory is executed, the processor is configured to perform the method according to any one of claims 1 to 3, or perform the method according to any one of claims 4 and 5.
